# EUROPEAN PATENT APPLICATION

(11) **EP 4 671 453 A1**
(43) Date of publication of application: **31.12.2025**
(21) Application number: 25184317.3
(22) Date of filing: 20.06.2025
(51) Int. Cl.: E02F 9/22, F15B 20/00

(54) **ELECTRO-HYDRAULIC STEERING SYSTEM**

(30) Priority: 25.06.2024 IT 202400014590
(71) Applicant: CNH Industrial Italia S.p.A., 10156 Torino (IT)
(72) Inventor: Garramone, Adriano, 10156 Turin (IT); Liberti, Stefano, 10156 Turin (IT); Gravili, Andrea, 10156 Turin (IT)
(74) Representative: CNH Industrial IP Department

(57) **Abstract**

Electro-hydraulic steering system (C) comprising an electric pump (HP) arranged to power a steering device (HSA), processing means (CPU) configured to deactivate said electric pump in response to deactivation of the steering device and wherein the system comprises a hydraulic accumulator (EHP) operatively connected with said electric pump and with said steering device and wherein said processing means is configured to activate said electric pump in response to activation of the steering device and when a pressure value measured in said hydraulic accumulator (EHP) is greater than a first predetermined threshold (Th1) and less than or equal to a second predetermined threshold (Th2).

## Description

### Field of the invention

The present invention relates to a hydraulic control system useful for controlling the steering of an electric vehicle, in particular of a work vehicle, such as an agricultural or construction vehicle.

The present control system is based on a closed hydraulic circuit.

### State of the art

Conventional hydraulic power steering systems generally include a steering gear having a hydraulic motor powered by a fluid pump that draws hydraulic fluid from a fluid reservoir and is typically driven by the engine or, indirectly, by the vehicle transmission.

The steering wheel is connected to a rotary control valve that directs hydraulic fluid to the hydraulic motor in response to a clockwise or counter-clockwise rotation of the steering wheel. The hydraulic motor is operatively connected to the steering leverages of the vehicle wheels to cause a steering action.

Typically, the hydraulic fluid pumped by the hydraulic pump is directed to a priority valve that is responsible for primarily satisfying the demands of the steering system and sending the residual flow to other actuators such as a hydraulic arm or lift, etc.

Some solutions provide for the hydraulic pump to be electro-actuated, by means of a dedicated electric motor for steering the wheels. For this reason, the hydraulic pump is named as "electro-pump".

In work or agricultural vehicles, the steering system is intrinsically safe, as it is based on a gerotor and therefore, in emergency conditions, i.e. in the absence of oil from the hydraulic pump, the oil is pumped by the operator's action on the steering wheel. Evidently, the effort required to operate the steering wheel is significantly increased and the steering operation is significantly slower.

The latest regulations require the implementation of additional auxiliary means in addition to the gerotor.

In a vehicle in which the main pump that supplies the hydraulic circuit is an electric pump, the new regulation leads to the implementation of a second electric pump, which entails a significant increase in the cost of the vehicle. Unless specifically excluded in the detailed description that follows, what is described in this chapter is to be considered as an integral part of the detailed description.

### Summary of the invention

The purpose of the present invention is to indicate a hydraulic steering system that, while meeting the safety requirements of the new standards, allows the implementation of a second electric pump to be avoided.

The basic idea of the present invention is to implement a hydraulic accumulator in place of a second electric pump, which in emergency conditions is able to provide a flow of hydraulic oil in place of the single electric pump. Furthermore, an activation logic of the "single" electric pump is provided to serve both the steering system and the recharging of the hydraulic accumulator.

Processing means are preferably configured to activate the electric pump when at least one of the following conditions is verified:
- the steering device is active,
- a pressure value measured in said hydraulic accumulator is lower than a predetermined threshold,
- a hydraulic user is active.

The dependent claims describe preferred variants of the invention, forming an integral part of the present description.

### Brief description of the figures

Further objects and advantages of the present invention will be apparent from the following detailed description of an embodiment thereof (and variations thereof) and the accompanying drawings given purely for explanatory and non-limiting purposes, in which:
- Fig. 1 shows an exemplary electro-hydraulic diagram of the present invention;

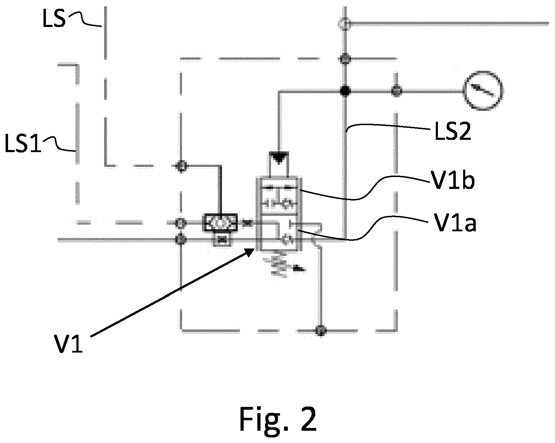

- Fig. 2 shows a detail of the diagram of Fig. 1;
- Fig. 3 shows an example of a work vehicle implementing the circuit of Figure 1,
- Fig. 4 shows a summary of the control logic of the invention.

The same reference numbers and letters in the figures identify the same elements or components or functions.

It should also be noted that the terms "first", "second", "third", "upper", "lower" and the like may be used herein to distinguish various elements. These terms do not imply a spatial, sequential or hierarchical order for the modified elements unless specifically indicated or inferred from the text.

The elements and features illustrated in the various preferred embodiments, including the drawings, may be combined with each other without departing from the scope of protection of the present application as described below..

### Detailed description

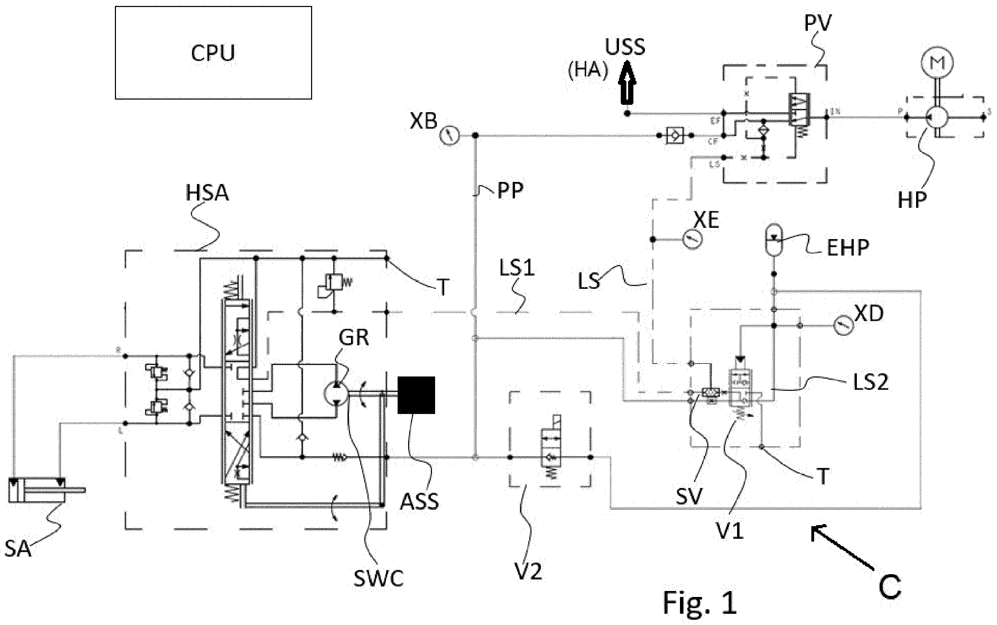

Fig. 1 shows a schematic of a modified electro-hydraulic steering circuit C according to the present invention.

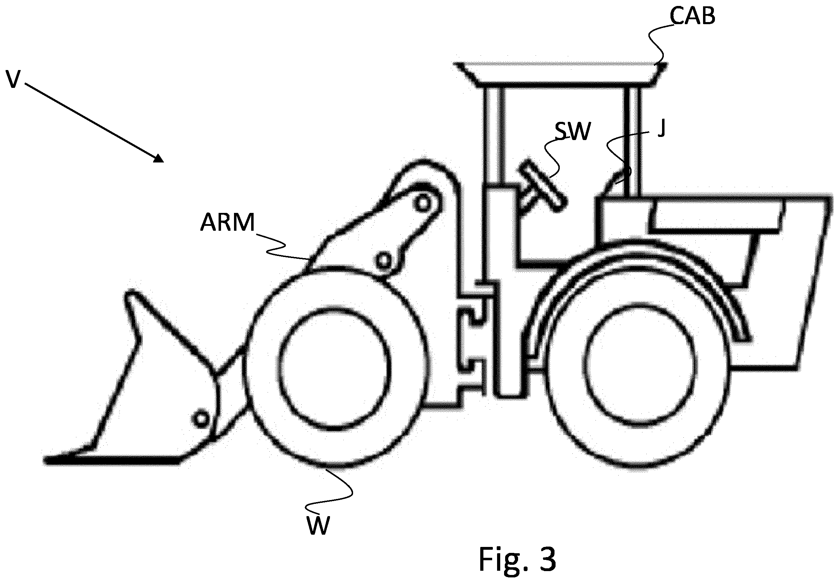

It comprises an actuator SA arranged to control the steering levers (not shown) connected to the wheels W of a vehicle axle. The actuator SA is controlled by a steering device HSA served by a steering wheel SW housed in a vehicle cabin CAB, see Fig. 3.

Such a steering device HSA includes the aforementioned steering actuator SA and preferably a gerotor GR.

The steering wheel is operationally connected to a so-called "steering column" SWC to which an angular sensor ASS is associated.

The angular sensor is operationally connected to a processing unit CPU which has the task of controlling the electro-hydraulic circuit and implementing a logic described in detail below.

An electro-pump HP, i.e. a pump driven by an electric motor M, is arranged to pressurize the circuit C. The pump is connected to a priority valve PV which, as known, has the task of serving the hydraulic steering device HSA with priority. The remaining flow of hydraulic oil is sent to the secondary users USS, which can be an arm, a bucket, a hydraulic lift, etc...

According to the present invention, a hydraulic accumulator EHP is operationally connected to the hydraulic line PP which connects the hydraulic steering device HSA, with the pump HP. The hydraulic accumulator is connected to the hydraulic line PP via
- the automatic valve V1, i.e. controlled by a pressure signal associated with the hydraulic accumulator and
- the valve V2 controlled by the processing unit CPU in response to a pressure measurement performed on the line PP by means of the pressure sensor XB, operationally associated
with the PP line.

Valve V1 is responsible for charging the hydraulic accumulator by means of a hysteretic behaviour, while valve V2 is responsible for connecting the hydraulic accumulator to the device HSA in case of failure of the hydraulic pump. In particular, the hydraulic accumulator is configured to provide a flow of hydraulic oil when a pressure measurement performed by the pressure sensor XB indicates a malfunction of the HP hydraulic pump.

The pressure sensor XB and the angular sensor ASS are operationally connected with the processing unit that monitors the activation of the pump HP, therefore the processing unit is configured to monitor by means of the sensor XB the pressure value generated by the pump downstream of the priority valve PV.

In this description, "line" means "hydraulic line" and "pump" means "hydraulic pump" and "electric pump".

The line LS1 allows to create the so-called "load sensing", which allows to control the flow rate of hydraulic oil to be sent to the hydraulic steering device HSA, as a function of the load, i.e. a pressure value "sensed" by the same hydraulic steering device HSA. This solution is in itself known to those skilled in the art.

It can be seen in the diagram that the line LS1 passes through the shuttle valve SV, changing its reference sign to LS, and reaches the priority valve PV, which has the task of distributing the flow generated by the pump HP as described above.

The hydraulic accumulator is also connected to the shuttle valve SV via the LS2 line, so as to provide its sensing signal to the priority valve to allow the hydraulic accumulator to be recharged regardless of the operating conditions of the steering device.

The hydraulic accumulator is connected to the shuttle valve SV via the valve V1.

Thus the shuttle valve SV has a first input connected to the sensing line LS1, associated with the hydraulic steering device HSA, and a second input connected to the sensing line LS2 via the valve V1, associated with the hydraulic accumulator.

The output of the shuttle valve is connected to the priority valve via the LS line.

The pressure sensor XE is arranged on the hydraulic line LS, which, together with the valve V1, allows to adequately manage the hysteretic process of recharging the hydraulic accumulator.

According to a preferred aspect of the invention, the hydraulic accumulator is pressurized so as to work between a minimum and a maximum pressure value and in which the minimum value is sufficiently greater than the maximum working pressure value of the hydraulic steering device HSA. Only by way of example, pressure thresholds are described to clarify the operation of the circuit.

It is assumed that the steering device requires a maximum pressure value of 180 bar corresponding to Th1.

According to the example of the present invention, the hydraulic accumulator must work between two pressure thresholds greater than 180 bar, for example 190 and 220 bar, corresponding to Th2 and Th3 respectively.

Valve V1 is calibrated to make drawer V1a operational when a pressure value of the hydraulic accumulator reaches the minimum threshold, for example 190 bar, and to keep it operational during the recharging of the hydraulic accumulator between the minimum threshold and the maximum threshold, for example 220 bar.

Once the maximum threshold is reached, valve V1 is calibrated to make drawer V1b operational and keep it operational during the discharge of the hydraulic accumulator until the lower threshold of 190 bar is reached. Upon reaching this lower threshold, valve V1 makes drawer V1a operational again. This is therefore a cyclical behavior that is a function of the charging and discharging cycle of the hydraulic accumulator.

The hydraulic accumulator is therefore recharged by means of the drawer V1a which operationally connects the aforementioned line PP with the hydraulic accumulator and the aforementioned line LS2 with the shuttle valve SV.

Conversely, the drawer V1b interrupts the operational connections between the aforementioned line PP and the hydraulic accumulator and the line LS2 and the shuttle valve SV and at the same time connects the line LS2 to the recovery tank T. The recovery tank T is an ambient pressure tank typical of open-center circuits.

The processing unit CPU, in response to the detection via the angle sensor ASS that the steering device is active, controls the activation of the HP pump, so as to generate a predetermined hydraulic oil flow value. However, to define said predetermined hydraulic oil value it is necessary to detect whether the hydraulic accumulator needs to be recharged or not.

The pressure sensor XE, operationally connected to the sensing line LS, allows knowing its value.

When the drawer V1a is in operation, the pressure value measured by the sensor XE is approximately 190 to 200 bar, while when the drawer V1b is in operation, the pressure value measured by the sensor XE is less than 180 bar.

The CPU then determines the hydraulic oil flow rate to be pumped based on the pressure value measured by XE.

So, if the pressure value measured by XE is between 190 and 220 bar, and at the same time the steering device is active, then the hydraulic oil flow rate must be such that both consumers, i.e. the steering device and the hydraulic accumulator, are satisfied.

When, on the other hand, the sensor XE returns a pressure value between 190 and 220 bar, while the angle sensor returns that the steering device is inactive, then the flow of hydraulic oil must satisfy only the recharging of the hydraulic accumulator.

When, on the other hand, the pressure value measured by sensor XE is less than 180 bar, and at the same time the steering device is active, then the flow of hydraulic oil must be such as to satisfy only the steering device.

The circuit includes an additional pressure sensor XD associated directly with the hydraulic accumulator, i.e. not via any valve. Instead, the sensor XE is connected indirectly to the hydraulic accumulator via the valve V1 and the shuttle valve SV.

This sensor XD is necessary because if the vehicle V is left inactive for a long time, it is plausible that the pressure inside the hydraulic accumulator falls below the aforementioned minimum threshold of 190 bar.

When the vehicle is activated, the sensor XE would therefore not be sufficient to define whether the hydraulic accumulator is connected to the line PP as a consumer or not.

When the pressure value measured by the sensor XD is lower than the value of 190 bar (Th2), then the CPU processing unit is forced to keep the pump active to provide a flow of hydraulic oil such as to satisfy the steering device and the hydraulic accumulator at the same time.

The sensor XD, however, cannot replace the sensor XE in all operating conditions, since the sensor XD is connected to the accumulator upstream of the valve V1, while the XE sensor is connected downstream of the SV valve, considering the accumulator as a source. The V1 valve allows the aforementioned hysteretic cycle to be realized. If one were to rely only on the sensor XD, then it would be necessary to use a solenoid valve instead of the valve V1 and manage the accumulator charging via software, to activate the accumulator charging when the threshold of 190 bar is reached and keep it active until the threshold of 220 bar is reached, creating a hysteretic behavior of the hydraulic accumulator charging.

For completeness, it is necessary to remember that also the activation of an auxiliary hydraulic device USS can lead to the generation of a predetermined flow of hydraulic oil by the pump.

For example,
- the maximum flow of hydraulic oil that the pump can generate is 55 l/min,
- the activation of the steering device results in the generation of 30 l/min of hydraulic oil, corresponding to F1,
- the recharging of the hydraulic accumulator results in the generation of 5 l/min of hydraulic oil, corresponding to F2,
- the activation of an ARM hydraulic organ results in the generation of 10 l/min of hydraulic oil, corresponding to F3.

The activation of the hydraulic organ ARM is detected through the operator activation of a human/machine interface device other than the steering wheel, for example a joystick J.

The hydraulic flow that the pump must generate is given by the sum of the individual flow requests by
- steering device,
- hydraulic accumulator and
- hydraulic organ,
and if the sum exceeds the maximum flow of hydraulic oil that the pump can generate then, evidently, the pump delivers the maximum possible flow. In other words, the oil flow value saturates at the maximum value that the pump can deliver.

Thus, for example:
- if the steering device is off and the accumulator is empty, and the joystick is operated, then the hydraulic pump is controlled to generate a flow of 15 l/min, i.e. 10 + 5 l/min, of hydraulic oil,
- if the steering device is on and the accumulator is empty, and the joystick is not operated, then the hydraulic pump is controlled to generate a flow of 35 l/min, i.e. 30 + 5 l/min, of hydraulic oil,
- if the steering device is on and the accumulator is charged, and the joystick is operated, then the hydraulic pump is controlled to generate a flow of 40 l/min, 30 + 10 l/min of hydraulic oil,
- if the steering device is on and the accumulator is empty, and the joystick is operated, then the hydraulic pump is controlled to generate a flow of 45 l/min, i.e. 30 + 10 +5 l/min, of hydraulic oil. In the event that the flow required by the activation of the hydraulic organ was 35 l/min, then the hydraulic pump is controlled to generate a flow of 55 l/min equal to the maximum flow that it can generate and less than the total request of 70 l/min, i.e. 30 + 35 + 5 l/min.

Preferably, on the line connecting the hydraulic accumulator to the line PP via valve V1, a throttling valve is placed to limit the flow of oil reaching the hydraulic accumulator, so as not to affect the operation of the steering device at the first activation of the vehicle, when the hydraulic accumulator could have an initial pressure value below the maximum pressure value (Th1) of the steering device, in the event that the latter is activated at the same time as the accumulator is recharging.

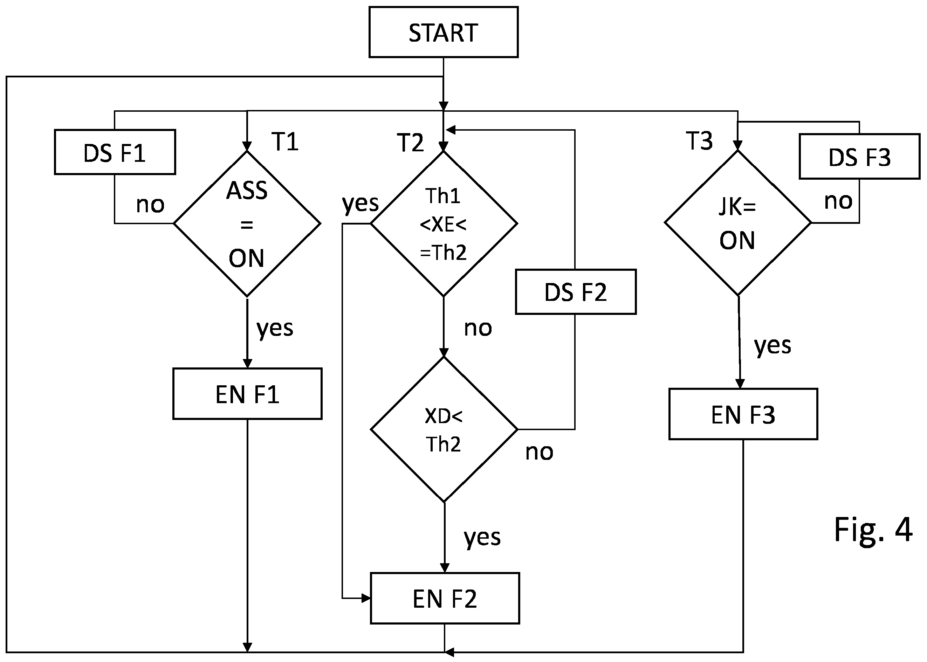

The control logic, according to a variant of the invention, can therefore be summarized as follows with the help of Fig. 4.

Three tasks are executed in parallel and all recursive: T1: if the angle sensor is active ((ASS = ON) = yes) then the flow F1, "EN F1", is generated, if instead the angle sensor is inactive ((ASS = ON) = no) then the flow F1 is not generated (DS F1) and the process starts again from the beginning;

T2: if the pressure sensor XE returns a pressure value between Th1 and Th2 inclusive ((Th1 < XE <= Th2) = yes), then the flow F2 is generated, regardless of the reading made by the sensor XD; However, if the pressure sensor XE returns a pressure value not included between Th1 and Th2 included ((Th1 < XE <= Th2) = no), and at the same time the sensor XD returns a pressure value lower than Th2 ((XD < Th2) = yes) then the flow F2 is generated, if instead the pressure sensor XE returns a pressure value not included between Th1 and Th2 included ((Th1 < XE <= Th2) = no) and at the same time the sensor XD returns a pressure value higher than Th2 ((XD < Th2) = no), then the flow F2 is not generated and the process starts again from the beginning; T3: if the control device of a hydraulic organ, for example a joystick, returns a signal representing its actuation ((JK = ON) = yes) then the flow F1 is generated, vice versa the flow F1 is not generated and the process starts again from the beginning.

If none of the flows are generated, then the processing unit can control the deactivation of the hydraulic pump or it can be adjusted so as to generate a flow of hydraulic oil strictly sufficient to keep the hydraulic circuit C pressurized.

If the sum of the flows generated is greater than the maximum flow that the pump can generate, then the processing unit can control the hydraulic pump so as to generate the maximum flow of hydraulic oil.

Variations of the non-limiting example described are possible, without however departing from the scope of protection of the present invention, including all the embodiments equivalent for a technician in the field, to the content of the claims.

From the description reported above, the technician in the field is able to realize the object of the invention without introducing further construction details.

## Claims

1. Hydraulic circuit (C) for powering a steering device (HSA) of an electric work vehicle (V) and at least one hydraulic work user (ARM), the hydraulic circuit comprising a hydraulic accumulator (EHP) and a single electric hydraulic pump (HP) configured to power
- said steering device (HSA),
- at least one hydraulic actuator (HA) of said at least one work user (ARM) of the electric work vehicle,
- said hydraulic accumulator (EHP),
the hydraulic pump being configured to activate in response to
. a first signal, generated by a rotation sensor (ASS) associated with a steering wheel (SW) of the vehicle, and representing an activation of the steering device and/or
. a presence of at least a second signal, generated by interface means (J), other than said steering wheel, for controlling said at least one hydraulic actuator (HA), other than the steering device, and/or
. at least a third signal, generated by a first pressure sensor (XE), representative of a pressure measurement associated with said hydraulic accumulator, when said pressure measurement is greater than a first predetermined threshold (Th1) and less than or equal to a second predetermined threshold (Th2).

2. Circuit according to claim 1, wherein said hydraulic pump is configured to generate a first flow value (EN F1) of hydraulic oil in response to said first signal and a third flow value (EN F3) in response to said third signal.

3. Circuit according to claim 2, wherein the hydraulic pump is configured to generate a sum flow (EN F1 + EN F2) in response to a simultaneous verification of
- activation of the steering device and
- said pressure measurement is greater than the first predetermined threshold (Th1) and less than or equal to the second predetermined threshold (Th2).

4. Circuit according to any of the preceding claims, wherein said hydraulic accumulator is operatively connected to said hydraulic pump as a user by means of a first valve (V1) arranged to control a hysteretic cycle for recharging the hydraulic accumulator between said second threshold and a third predetermined threshold (Th3) greater than the second threshold (Th2) and is operatively connected to said steering device as an emergency source through a second valve (V2) other than said first valve (V1).

5. Circuit according to any of the preceding claims, further comprising at least one hydraulic actuator (HA) enslaved to said at least one work user (ARM) of the electric work vehicle and wherein said hydraulic pump is configured to also activate in response to the presence of said at least one second signal, generated by interface means (J), other than said steering wheel (SW), to control said at least one hydraulic actuator, other than the steering device.

6. The circuit of claim 5, further comprising a priority valve (PV) arranged to shunt a flow of hydraulic oil generated by said pump between
- said steering device (HSA) and/or said hydraulic accumulator (EHP) by means of a first hydraulic line (PP) and
- said at least one hydraulic actuator (HA),
giving priority to the steering device and/or the hydraulic accumulator.

7. The circuit of claim 6 and 4, wherein said second valve (V2) is normally closed and configured to open in response to a fourth signal generated by a second pressure sensor (XB), operatively associated with said first hydraulic line (PP), when said fourth signal is representative of a pressure value lower than a fourth predetermined threshold (Th4), lower than said first threshold (Th1) indicative of a malfunction of the hydraulic pump.

8. A circuit according to any of claims 4 - 7, wherein said first threshold (Th1) represents a maximum working pressure value of the steering device that is less than said second threshold (Th2), so as to always be distinguishable from the second threshold that represents a minimum pressure value of the hydraulic accumulator.

9. A circuit according to any of the preceding claims, further comprising a third pressure sensor (XD) directly and operatively connected to said hydraulic accumulator and configured to generate a fifth signal representative of a pressure value that is representative of a pressurization state of the hydraulic accumulator and wherein said hydraulic pump is configured to activate in response to a pressure value generated by said third pressure sensor that is less than said second threshold (Th2).

10. A circuit according to any one of claims 6 - 9, further comprising a shuttle valve (SV) having a first input connected to the steering device, a second input connected to the hydraulic accumulator, and an output connected to said priority valve, and wherein said first pressure sensor (XE) is operatively associated with the output of the shuttle valve.

11. A method of controlling a hydraulic circuit for powering a steering device (HSA) of an electric work vehicle (V), the hydraulic circuit (C) comprising a hydraulic accumulator (EHP) and a single electric hydraulic pump (HP) configured to power
- said steering device (HSA),
- said hydraulic accumulator (EHP),
the hydraulic pump being configured to activate in response to
. a first signal, generated by a rotation sensor (ASS) associated with a steering wheel (SW) of the vehicle, and representative of an activation of the steering device and/or
. at least a third signal, generated by a first pressure sensor (XE), representative of a pressure measurement associated with said hydraulic accumulator,
the method comprising a step of activating said hydraulic pump when said pressure measurement is greater than a first predetermined threshold (Th1) and less than or equal to a second predetermined threshold (Th2).
